# EUROPEAN PATENT APPLICATION

(11) **EP 4 489 179 A2**
(43) Date of publication of application: **08.01.2025**
(21) Application number: 24183077.7
(22) Date of filing: 19.06.2024
(51) Int. Cl.: H01M 10/42

(54) **MULTIPLEXED BATTERY MANAGEMENT COMMUNICATION INTERFACE**

(30) Priority: 30.06.2023 US 202363524535 P; 14.06.2024 US 202418744130
(71) Applicant: Vertiv Corporation, Westerville, OH 43082 (US)
(72) Inventor: Dixon, William M., Lewis Center, 43035 (US); Dille, Guy M., Mason, 45040 (US)
(74) Representative: Cousens, Nico

(57) **Abstract**

A battery management system (BMS) may include two or more transceivers to communicate via different communication protocols to slave controllers connected to one or more batteries; one or more shared output circuits between the two or more transceivers and additional components of the BMS; and one or more switches to selectively connect one of the two or more transceivers to the one or more shared output circuits. Any combination or type of output circuits may be shared by the transceivers including, but not limited to, surge protection output circuits, isolation output circuits, or noise filtering output circuits.

## Description

### CROSS-REFERENCE TO RELATED APPLICATION

The present application claims priority to U.S. Provisional Application Serial Number 63/524,535, filed June 30, 2023, entitled MULTIPLEXED BATTERY MANAGEMENT COMMUNICATION INTERFACE.

### TECHNICAL FIELD

The present disclosure relates generally to a battery management system (BMS) and, more particularly, to a BMS providing multiplexed output stages.

### BACKGROUND

A typical battery management system (BMS) for Li-ion or other non-lead battery chemistries typically includes of a master BMS controller which is accessible to a user or technician, along with distant slave controllers that are attached locally to one or more battery packs. The master and slave controllers are often designed and produced by different companies, with the slave controller often being made by the battery manufacturer. However, when considering high battery voltages (sometimes up to 1500 V) and the resulting need for large signal isolation devices (such as transformers) required for user safety, each communication interface typically requires its own complete circuit with relatively high complexity, resulting in high cost, high part count and more physical space being required. There is therefore a need to develop systems and methods to address the above deficiencies.

### SUMMARY

In embodiments, the techniques described herein relate to a battery management system (BMS) including two or more transceivers configured to communicate via different communication protocols to slave controllers connected to one or more batteries; one or more shared output circuits between the two or more transceivers and additional components of the BMS; and one or more switches to selectively connect one of the two or more transceivers to the one or more shared output circuits.

In embodiments, the techniques described herein relate to a BMS, where at least one of the two or more transceivers is configured to communicate over a wired communication channel.

In embodiments, the techniques described herein relate to a BMS, where at least one of the two or more transceivers is configured to communicate over a wireless communication channel.

In embodiments, the techniques described herein relate to a BMS, where a first of the two or more transceivers is configured to communicate with a first of the slave controllers associated with a first type, where a second of the two or more transceivers is configured to communicate with a second of the slave controllers of a second type.

In embodiments, the techniques described herein relate to a BMS, where a first of the two or more transceivers is configured to communicate with a first of the slave controllers associated with the one or more batteries of a first type, where a second of the two or more transceivers is configured to communicate with a second of the slave controllers associated with the one or more batteries of a second type.

In embodiments, the techniques described herein relate to a BMS, where at least one of the two or more transceivers includes an application-specific integrated circuit.

In embodiments, the techniques described herein relate to a BMS, where at least one of the one or more shared output circuits includes a surge protection circuit.

In embodiments, the techniques described herein relate to a BMS, where at least one of the one or more shared output circuits includes an isolation circuit.

In embodiments, the techniques described herein relate to a BMS, where at least one of the one or more shared output circuits includes a noise filtering circuit.

In embodiments, the techniques described herein relate to a BMS, where the different communication protocols include at least one of different hardware or different command sets.

In embodiments, the techniques described herein relate to an energy management system including one or more batteries; and a battery management system (BMS) configured to operate the one or more batteries, where the BMS includes two or more transceivers configured to communicate via different communication protocols to slave controllers connected to the one or more batteries; one or more shared output circuits between the two or more transceivers and additional components of the BMS; and one or more switches to selectively connect one of the two or more transceivers to the one or more shared output circuits.

In embodiments, the techniques described herein relate to an energy management system, where at least one of the two or more transceivers is configured to communicate over a wired communication channel.

In embodiments, the techniques described herein relate to an energy management system, where at least one of the two or more transceivers is configured to communicate over a wireless communication channel.

In embodiments, the techniques described herein relate to an energy management system, where a first of the two or more transceivers is configured to communicate with a first of the slave controllers associated with a first type, where a second of the two or more transceivers is configured to communicate with a second of the slave controllers of a second type.

In embodiments, the techniques described herein relate to an energy management system, where a first of the two or more transceivers is configured to communicate with a first of the slave controllers associated with the one or more batteries of a first type, where a second of the two or more transceivers is configured to communicate with a second of the slave controllers associated with the one or more batteries of a second type.

In embodiments, the techniques described herein relate to an energy management system, where at least one of the two or more transceivers includes an application-specific integrated circuit.

In embodiments, the techniques described herein relate to an energy management system, where at least one of the one or more shared output circuits includes a surge protection circuit.

In embodiments, the techniques described herein relate to an energy management system, where at least one of the one or more shared output circuits includes an isolation circuit.

In embodiments, the techniques described herein relate to an energy management system, where at least one of the one or more shared output circuits includes a noise filtering circuit.

In embodiments, the techniques described herein relate to a BMS, The energy management system, where the different communication protocols include at least one of different hardware or different command sets.

It is to be understood that both the foregoing general description and the following detailed description are exemplary and explanatory only and are not necessarily restrictive of the invention as claimed. The accompanying drawings, which are incorporated in and constitute a part of the specification, illustrate embodiments of the present disclosure and together with the general description, serve to explain the principles of the disclosure.

### BRIEF DESCRIPTION OF DRAWINGS

The numerous advantages of the disclosure may be better understood by those skilled in the art by reference to the accompanying figures.
FIG. 1 is a block diagram of an energy management system, in accordance with one or more embodiments of the present disclosure.
FIG. 2A is a simplified schematic of a first design of a BMS, in accordance with one or more embodiments of the present disclosure.
FIG. 2B is a simplified schematic of a second design of a BMS, in accordance with one or more embodiments of the present disclosure.
FIG. 2C is a simplified schematic of a third design of a BMS, in accordance with one or more embodiments of the present disclosure.

### DETAILED DESCRIPTION

Reference will now be made in detail to the subject matter disclosed, which is illustrated in the accompanying drawings. The present disclosure has been particularly shown and described with respect to certain embodiments and specific features thereof. The embodiments set forth herein are taken to be illustrative rather than limiting. It should be readily apparent to those of ordinary skill in the art that various changes and modifications in form and detail may be made without departing from the scope of the disclosure.

Embodiments of the present disclosure are directed to systems and methods providing a battery management system (BMS) with multiplexed output stages.

In some embodiments, an energy management system includes multiple batteries and a BMS to control the operation of the batteries. Further, the BMS may include circuitry suitable for operation with multiple battery types or configurations.

It is contemplated herein that a typical system may include a master/slave configuration in which individual batteries or packs of batteries have dedicated slave controllers and where the BMS operates as a master controller. In practice, these master and slave controllers may be designed and produced by different companies, where the slave controllers are often provided by battery manufacturers. Different battery chemistries and/or product offerings by different companies may also utilize different communication protocols and/or isolation stages. For example, high-voltage applications (e.g., up to or greater than 1500 V) may require large signal isolation devices such as, but not limited to, transformers to meet safety and/or performance requirements.

As a result, typical BMS devices may either be designed to work with a single output configuration (e.g., communication protocol, isolation circuit, or the like) or may provide a switch to enable operation with duplicative systems. Such solutions suffer from inflexible operation, high complexity, high part count, and/or high cost.

In some embodiments, a BMS combines (e.g., multiplexes) the output stages of separate communication interfaces (e.g., transceivers) into a single circuit (e.g., a single group of parts). Such a design may beneficially provide both flexible operation with different battery chemistries and/or output stage requirements while maintaining a relatively low part count, low complexity, and low cost. Such a BMS may thus accommodate multiple types of slave controllers at a given cost point, which may improve supply chain flexibility among other benefits.

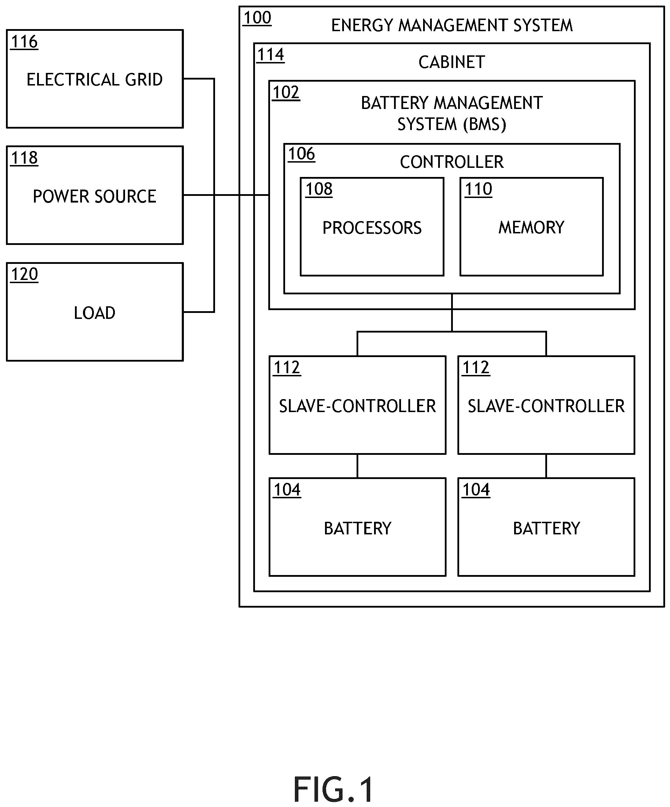

Referring now to FIGS. 1-2C, systems and methods for a BMS with multiplexed output stages are described in greater detail, in accordance with one or more embodiments of the present disclosure.

FIG. 1 is a block diagram of an energy management system 100, in accordance with one or more embodiments of the present disclosure.

In some embodiments, an energy management system 100 includes a battery management system (BMS) 102 connected to one or more batteries 104. The energy management system 100 may include any number or type of batteries 104 such as, but not limited to, lithium-ion, nickel-cadmium, or lead acid. Further, a battery 104 may be formed as a single unit or as multiple units connected in either series or parallel. For example, a battery 104 may be formed as a rack of battery sub-units.

In some embodiments, any of the batteries 104 may include components to perform various functions such as, but not limited to, monitoring, control, or communications. For example, a battery 104 may include one or more sensors to monitor properties such as, but not limited to, charge, a charging state, a voltage, incoming or outgoing current, temperature, or predicted lifespan. As another example, a battery 104 may include charging circuitry to control charge/discharge rates, circuity to prevent over-voltage, over-current, or over-temperature conditions, or the like.

The BMS 102 may include any type of battery management or control system known in the art and may perform a variety of operations.

In some embodiments, the BMS 102 includes a controller 106. The controller 106 may include one or more processors 108 configured to execute program instructions maintained on memory 110, or memory medium. In this regard, the one or more processors 108 of the controller 106 may execute any of the various process steps described throughout the present disclosure.

The one or more processors 108 of the controller 106 may include any processor or processing element known in the art. For the purposes of the present disclosure, the term "processor" or "processing element" may be broadly defined to encompass any device having one or more processing or logic elements (e.g., one or more micro-processor devices, one or more application-specific integrated circuit (ASIC) devices, one or more field programmable gate arrays (FPGAs), or one or more digital signal processors (DSPs)). In this sense, the one or more processors 108 may include any device configured to execute algorithms and/or instructions (e.g., program instructions stored in memory). In some embodiments, the one or more processors 108 may be embodied as a desktop computer, mainframe computer system, workstation, image computer, parallel processor, networked computer, or any other computer system configured to execute a program configured to operate or operate in conjunction with the energy management system 100, as described throughout the present disclosure.

Moreover, different subsystems of the energy management system 100 may include a processor or logic elements suitable for carrying out at least a portion of the steps described in the present disclosure. Therefore, the above description should not be interpreted as a limitation on the embodiments of the present disclosure but merely as an illustration. Further, the steps described throughout the present disclosure may be carried out by a single controller 106 or, alternatively, multiple controllers. Additionally, the controller 106 may include one or more controllers housed in a common housing or within multiple housings. In this way, any controller or combination of controllers may be separately packaged as a module suitable for integration into the energy management system 100.

The memory 110 may include any storage medium known in the art suitable for storing program instructions executable by the one or more processors 108. For example, the memory 110 may include a non-transitory memory medium. By way of another example, the memory 110 may include, but is not limited to, a read-only memory (ROM), a random-access memory (RAM), a magnetic or optical memory device (e.g., disk), a magnetic tape, a solid-state drive and the like. It is further noted that memory 110 may be housed in a common controller housing with the one or more processors 108. In some embodiments, the memory 110 may be located remotely with respect to the physical location of the one or more processors 108 and the controller 106. For instance, the one or more processors 108 of the controller 106 may access a remote memory (e.g., server), accessible through a network (e.g., internet, intranet and the like).

In some embodiments, the BMS 102 may monitor various properties of any of the batteries 104 including, but not limited to, a charge, a charging state, a voltage, incoming or outgoing current, temperature, or predicted lifespan. In some embodiments, the BMS 102 may perform various control functions such as, but not limited to, load balancing between batteries 104, charging control, over-voltage protection, over-current protection, or over-heating protection.

In some embodiments, the BMS 102 may communicate with additional systems, such as, but not limited to, an external control system, an additional BMS 102, the batteries 104, or the like. For example, the energy management system 100 may include one or more slave controllers 112 connected to any combination of the batteries 104. For example, as illustrated in FIG. 1, any battery 104 may have a dedicated slave controller 112. As another example, though not explicitly shown, any particular slave controller 112 may be connected to any number of batteries 104.

Each slave controller 112 may provide various functions. For example, a slave controller 112 may monitor various properties of any connected batteries 104 including, but not limited to, a charge, a charging state, a voltage, incoming or outgoing current, temperature, or predicted lifespan. This data may then be provided back to the BMS 102 for master control operations. As another example, a slave controller 112 may perform various control operations such as, but not limited to, load balancing between connected batteries 104, charging control, over-voltage protection, over-current protection, or over-heating protection. Such control operations may be done autonomously and/or upon receiving instructions from the BMS 102. In a general sense, the BMS 102 and any slave controllers 112 may coordinate any control operations for the energy management system 100.

In some embodiments, the energy management system 100 includes one or more enclosures 114 to secure and/or house various components such as, but not limited to, the BMS 102 or any of the batteries 104. For example, an enclosure 114 may include a cabinet or a rack system including various openings, platforms, rails, guides, or the like suitable for housing the various components. As will be described in greater detail below, an enclosure 114 may further include components suitable for providing electrical connections with or between any installed components.

The energy management system 100 may provide a variety of different functions, which may be managed at least in part by the BMS 102. For example, the energy management system 100 may be connected to external systems such as, but not limited to, an electrical grid 116, a power source 118 (e.g., solar energy source, a wind energy source, or the like), or a load 120. In some embodiments, the energy management system 100 operates as an uninterruptible power supply (UPS). In this configuration, the load 120 may be powered by any combination of a grid 116 or a power source 118 under typical conditions, but may be powered by the batteries 104 when the grid 116 and/or the power source 118 have insufficient power supply. Further, the batteries 104 may be charged by the grid 116 and/or the power source 118 and/or may provide power back to the grid 116 and/or the power source 118.

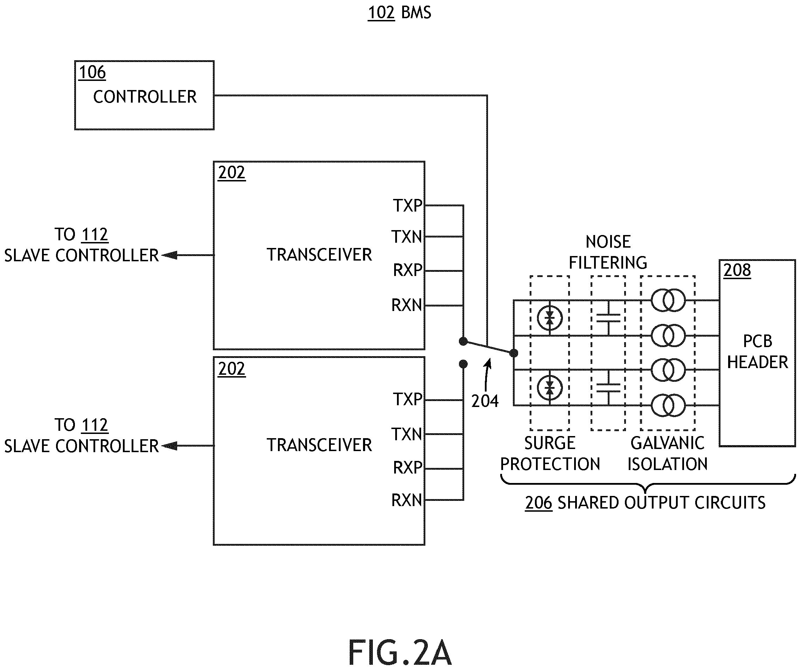

Referring now to FIGS. 2A-2C, a BMS 102 with multiplexed output stages is described, in accordance with one or more embodiments of the present disclosure.

FIG. 2A is a simplified schematic of a first design of a BMS 102, in accordance with one or more embodiments of the present disclosure.

In some embodiments, a BMS 102 includes two or more transceivers 202, one or more switches 204 to select between the transceivers 202, and one or more shared output circuits 206. For example, each of the transceivers 202 may be configured to communicate using a different communication protocol. As an illustration, each of the transceivers 202 may be configured to communicate with a slave controller 112 (e.g., via different ports as depicted in FIG. 2A) that utilizes a different communication protocol. A communication protocol may include or otherwise incorporate any aspect of communication between a BMS 102 and a slave controller 112 such as, but not limited to, hardware (e.g., wired communication over electrical wiring, optical communication over fiber optic cables and/or free-space techniques, radio-frequency (RF) communication, or the like), electrical requirements (e.g., impedance requirements, voltage requirements, current requirements, or the like), or a command set. As an illustration, it is contemplated herein that different manufacturers may utilize different communication protocols such that only specific models of a typical BMS 102 and a typical slave controller 112 are able to communicate. However, in embodiments, a BMS 102 with multiplexed shared output circuits 206 and multiple transceivers 202 may be suitable for selectively communicating over different communication protocols, which may greatly expand the interoperability of such a BMS 102 with various slave controllers 112. Such a BMS 102 may then be compatible with and suitable for controlling a multiple types of batteries 104 with multiple types of slave controllers 112, while maintaining common shared output circuits 206 to maintain a small footprint, low part count, and low cost.

Each transceiver 202 may include any number or combination of components suitable for transmitting and/or receiving communications signals over any type or combination of communication channels (e.g., wired and/or wireless communication channels). For example, a transceiver 202 may include modulation components such as, but not limited to, a modulator and/or a demodulator. As another example, a transceiver 202 may include one or more antennas suitable for RF communication using any protocol such as, but not limited to, WiFi, Bluetooth, Bluetooth Low Energy (BLE), or the like. As another example, a transceiver 202 suitable for optical communication may include an optical source and/or an optical detector. Further, any of the transceivers 202 may be implemented using any type of hardware such as, but not limited to, an integrated circuit (IC) or an ASIC. As an illustration, FIG. 2A depicts two transceivers 202 provided as separate ASICs, which are connected to the shared output circuits 206 and ultimately a PCB header 208 for connection to additional components of the BMS 102. However, it is to be understood that FIG. 2A and the associated description is provided solely for illustrative purposes and should not be interpreted as limiting.

A BMS 102 may include number or type of shared output circuits 206 (e.g., multiplexed output circuits) suitable for use with any of the transceivers 202. In some embodiments, a shared output circuit 206 includes a surge protection circuit. In some embodiments, a shared output circuit 206 includes a noise filtering circuit. In some embodiments, a shared output circuit 206 includes an isolation circuit (e.g., a galvanic isolation output circuit 206). Any of the shared output circuits 206 may include any number or type of components suitable for providing an associated function including, but not limited to, passive components (e.g., resistors, capacitors, diodes, transformers or the like) and/or active components (e.g., amplifiers, or the like). Further, any of the shared output circuits 206 may be implemented using any type of hardware such as, but not limited to, as an integrated circuit (IC) or an ASIC.

A BMS 102 may include any number or type of switches 204 to selectively couple the shared output circuits 206 to a selected transceiver 202. For example, although FIG. 2A depicts a single switch 204, a BMS 102 may include multiple switches 204 to connect various pins or terminals of the slave controllers 112 to the shared output circuits 206 in any suitable configuration.

The switches 204 may include any number or type of components suitable for selectively coupling the shared output circuits 206 to one of the slave controllers 112 and may include, but are not limited to, mechanical relays or transistors.

In some embodiments, the switches 204 are connected to the controller 106 of the BMS 102. In this way, the controller 106 may control the states of the switches 204 (e.g., via control signals) to provide selective coupling between the shared output circuits 206 and one of the transceivers 202.

It is contemplated herein that different slave controllers 112 (e.g., associated with different battery chemistries, different companies, or the like) may have different requirements for output circuitry located between the BMS 102 and a battery 104. Accordingly, any of the shared output circuits 206 may be designed or configured to operate within specific performance tolerances with two or more configurations associated with the two or more transceivers 202. For example, different batteries 104, slave controllers 112, and/or transceivers 202 may have different transformer requirements and/or tolerances (e.g., associated with isolation shared output circuits 206). As another, different batteries 104, slave controllers 112, and/or transceivers 202 may have different impedance requirements and/or tolerances (e.g., associated with isolation shared output circuits 206). As another example, the switches 204 may have different requirements such as, but not limited to, voltage ranges, numbers of data lines supported, data rates, or the like).

In some applications, a single design or configuration of shared output circuits 206 may be suitable for operation with each of the transceivers 202 (and connected equipment including slave controllers 112, batteries 104, or the like) within performances tolerances. In this case, the shared output circuits 206 may have a static configuration and the BMS 102 may selectively switch between the different slave controllers 112 using the switches 204 without modification of the shared output circuits 206.

In some applications, a single design or configuration of shared output circuits 206 may not be suitable for operation with each of the transceivers 202 (and connected equipment including slave controllers 112, batteries 104, or the like) within performances tolerances. It is contemplated herein that slave controllers 112 may not typically be designed to be interoperable and that different models of slave controllers 112 may be continually developed. As a result, it may be impractical to utilize a single design or configuration of shared output circuits 206 for all of the transceivers 202 (and connected equipment including slave controllers 112, batteries 104, or the like).

In some embodiments, the switches 204 may be configured to directly modify the operation of any of the shared output circuits 206. For instance, the switches 204 may selectively connect or disconnect components (e.g., resistors, capacitors, diodes, or the like) in series or parallel with any components within the shared output circuits 206 to modify the operation of the shared output circuits 206 to meet the performance tolerances. In this way, although FIG. 2A depicts the switches 204 as being distinct from the shared output circuits 206, this is merely an illustration and should not be interpreted as limiting the spirit or scope of the present disclosure.

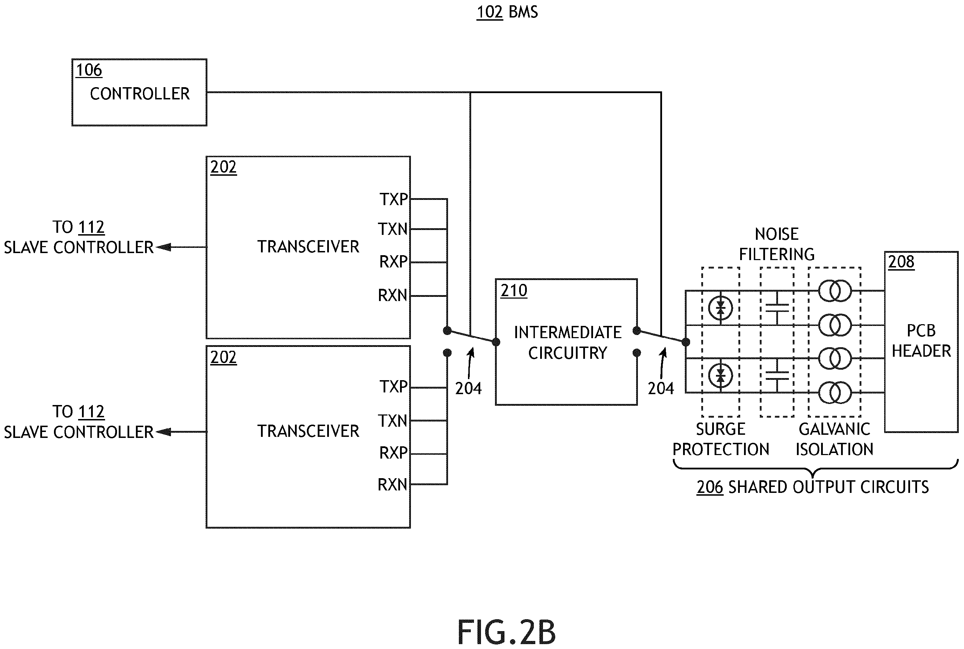

FIG. 2B is a simplified schematic of a second design of a BMS 102, in accordance with one or more embodiments of the present disclosure. In some embodiments, as depicted in FIG. 2B, the BMS 102 includes intermediate circuitry 210 that may selectively modify the characteristics of any of the shared output circuits 206 when connected to a particular transceiver 202. For example, such intermediate circuitry may include, but is not limited to, level shifters or clamping circuitry.

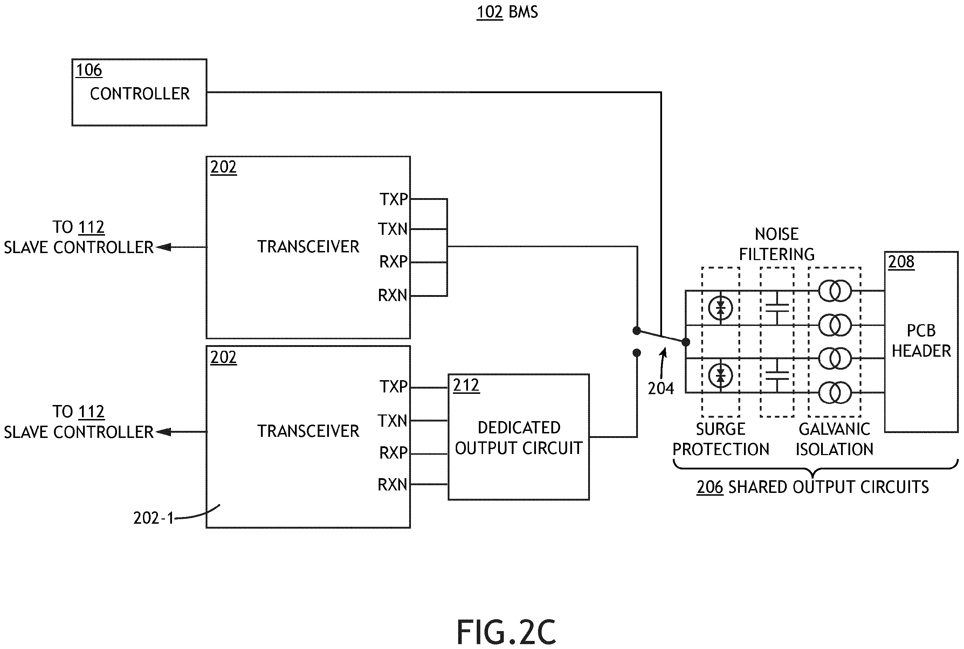

In some embodiments, the BMS 102 may include at least some output circuitry that is dedicated to a particular transceiver 202 or group of transceivers 202. As an illustration, FIG. 2C is a simplified schematic of a third design of a BMS 102, in accordance with one or more embodiments of the present disclosure. FIG. 2C is substantially similar to FIG. 2A except that the BMS 102 additionally includes one or more dedicated output circuits 212 connected to a particular transceiver 202-1. In this way, the BMS 102 may utilize any combination of shared output circuits 206 and dedicated output circuits 212 for any combination of transceivers 202.

The dedicated output circuits 212 may include any type of output circuits such as, but not limited to, surge protection circuits, noise filtering circuits, isolation circuits, or the like. The description of the shared output circuits 206 may thus extend to the dedicated output circuits 212.

The herein described subject matter sometimes illustrates different components contained within, or connected with, other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "connected" or "coupled" to each other to achieve the desired functionality, and any two components capable of being so associated can also be viewed as being "couplable" to each other to achieve the desired functionality. Specific examples of couplable include but are not limited to physically interactable and/or physically interacting components and/or wirelessly interactable and/or wirelessly interacting components and/or logically interactable and/or logically interacting components.

It is believed that the present disclosure and many of its attendant advantages will be understood by the foregoing description, and it will be apparent that various changes may be made in the form, construction, and arrangement of the components without departing from the disclosed subject matter or without sacrificing all of its material advantages. The form described is merely explanatory, and it is the intention of the following claims to encompass and include such changes. Furthermore, it is to be understood that the invention is defined by the appended claims.

## Claims

1. A battery management system "BMS" comprising:
two or more transceivers configured to communicate via different communication protocols to slave controllers connected to one or more batteries;
one or more shared output circuits between the two or more transceivers and additional components of the BMS; and
one or more switches to selectively connect one of the two or more transceivers to the one or more shared output circuits.

2. The BMS of claim 1, wherein at least one of the two or more transceivers is configured to communicate over a wired communication channel and/or wherein at least one of the two or more transceivers is configured to communicate over a wireless communication channel.

3. The BMS of any preceding claim, wherein a first of the two or more transceivers is configured to communicate with a first of the slave controllers associated with a first type, wherein a second of the two or more transceivers is configured to communicate with a second of the slave controllers of a second type.

4. The BMS of any preceding claim, wherein a first of the two or more transceivers is configured to communicate with a first of the slave controllers associated with the one or more batteries of a first type, wherein a second of the two or more transceivers is configured to communicate with a second of the slave controllers associated with the one or more batteries of a second type.

5. The BMS of any preceding claim, wherein at least one of the two or more transceivers comprises:
an application-specific integrated circuit.

6. The BMS of any preceding claim, wherein at least one of the one or more shared output circuits comprises one or more of:
a surge protection circuit;
an isolation circuit; and
a noise filtering circuit.

7. The BMS of any preceding claim, wherein the different communication protocols comprise:
at least one of different hardware or different command sets.

8. An energy management system comprising:
one or more batteries; and
a battery management system "BMS" configured to operate the one or more batteries, wherein the BMS comprises:
two or more transceivers configured to communicate via different communication protocols to slave controllers connected to the one or more batteries;
one or more shared output circuits between the two or more transceivers and additional components of the BMS; and
one or more switches to selectively connect one of the two or more transceivers to the one or more shared output circuits.

9. The energy management system of claim 8, wherein at least one of the two or more transceivers is configured to communicate over a wired communication channel and/or at least one of the two or more transceivers is configured to communicate over a wireless communication channel.

10. The energy management system of claim 8 or 9, wherein a first of the two or more transceivers is configured to communicate with a first of the slave controllers associated with a first type, wherein a second of the two or more transceivers is configured to communicate with a second of the slave controllers of a second type.

11. The energy management system of any of claims 8 to 10, wherein a first of the two or more transceivers is configured to communicate with a first of the slave controllers associated with the one or more batteries of a first type, wherein a second of the two or more transceivers is configured to communicate with a second of the slave controllers associated with the one or more batteries of a second type.

12. The energy management system of claims 8 to 11, wherein at least one of the two or more transceivers comprises:
an application-specific integrated circuit.

13. The energy management system of any of claims 8 to 12, wherein at least one of the one or more shared output circuits comprises one or more of:
a surge protection circuit;
an isolation circuit; and
a noise filtering circuit.

14. The energy management system of any of claims 8 to 13, wherein the different communication protocols comprise:
at least one of different hardware or different command sets.
